# EUROPEAN PATENT APPLICATION

(11) **EP 4 596 595 A1**
(43) Date of publication of application: **06.08.2025**
(21) Application number: 25153155.4
(22) Date of filing: 21.01.2025
(51) Int. Cl.: C08G 18/08, C08G 18/10, C08G 18/28, C08G 18/34, C08G 18/42, C08G 18/66, C08G 18/75, C09D 175/06

(54) **PRIMER FOR INKJET PRINTED LAMINATE**

(30) Priority: 01.02.2024 IT 202400002037
(71) Applicant: Lamberti SPA, 21041 Albizzate (VA) (IT)
(72) Inventor: RIMOLDI, Fabio, 21062 Cadrezzate con Osmate (VA) (IT); VETRI, Domenico, 21013 Gallarate (VA) (IT); BIGANZOLI, Livia, 21018 Sesto Calende (VA) (IT)
(74) Representative: Giaroni, Paola

(57) **Abstract**

Aqueous polymer compositions useful as primers for the preparation of inkjet printed laminates comprise a) a polyurethane with anionic and terminal non-ionic hydrophilic groups, obtained from hydrogenated diphenylmethane-4,4'-diisocyanate and a non-ionic polyester diol; b) a coagulating agent selected in the group consisting of water-soluble multivalent metal salts, water-soluble organic acids and mixtures thereof and, c) optionally, an acrylic binder.

## Description

The present invention relates to aqueous polymer compositions useful as primer for the preparation of inkjet printed laminate, said aqueous polymeric compositions comprising a polyurethane with anionic and terminal non-ionic hydrophilic groups, a coagulating agent and, optionally, an acrylic binder.

The present invention also relates to a method of preparing an inkjet printed laminate using of the aqueous polymer compositions described above.

### PRIOR ART

Substrates, like coated paper or polymeric films are normally used in the inkjet printing industry. Unfortunately, coating often makes it more challenging to achieve a good print quality in inkjet printing on paper. Similarly, insufficient ink wetting (dotgain) or intercolor bleed are often observed when directly printing with inkjet inks on polymeric films.

One way to address the difficulties regarding the inkjet printing of these substrates is to adapt the ink to the type of substrate. However, one inkjet ink might perform well on one substrate but not on another and time-consuming and expensive adjustments in ink composition are required to achieve the same printing quality on different substrates.

Another solution used in inkjet printing is to apply onto the substrate ink-receptive compositions (primers) in order to enhance printing quality, for example color yield, adhesion to the substrate, image sharpness etc. Usually, primers are combination of a water-soluble salt of a polyvalent metal ion and a cationic or non-ionic polymer, typically acrylic or polyurethane or vinyl polymers.

Yet another problem that is encountered is insufficient layer-to-layer adhesion or intra-layer cohesion when such printed layers are further laminated to produce final multi-layered packages or articles, in particular when the multi-layered packages or articles are subjected to pasteurization for use in regulated sectors, such as in food and pharmaceutical sectors.

In this case, an adjustment of the surface energy of the substrate, using, for example, a corona discharge treatment system, a plasma discharge treatment system, a flame ionization treatment system, and/or the introduction of an intermediate layer between the substrate and the primer, known as tie-layer, are required. However, these solutions are often insufficient to give acceptable adhesion of the primer to the substrate or the adhesive layer and, in addition, they increase the complexity and the costs of the laminate preparation process.

Thus, there is still a need for improved primers and methods of preparing inkjet printed laminates which address the problems and limitation listed above.

Surprisingly, it has now been found that aqueous polymer compositions comprising a specific polyurethane with anionic and terminal non-ionic hydrophilic groups, a coagulating agent and, optionally, an acrylic binder give a primer layer which allows inkjet printing of plastic substrates with high quality and show very good adhesion to the substrate and intra-layer cohesion.

Moreover, these aqueous polymer compositions are stable and homogeneous (or easily re-dispersible) and do not gel or develop persistent sediments over time and moderate heat.

As far as the Applicant knows, no one has disclosed before the aqueous polymer compositions of the invention and their remarkable performances as primer for inkjet printed laminates.

WO 2021/126611 describes an inkjet ink and primer fluid set for plastic substrates comprising: a) an aqueous primer composition comprising a multivalent cation salt and a polymeric binder, which is not soluble in water, is stable in the presence of said multivalent cation, and is selected from the group consisting of urethane polymers, acrylic polymers and vinyl polymers. The polymeric binder can be formed from the incorporation into the polymer of a hydrophilic nonionic component and, optionally, an additional anionic component. However, WO 2021/126611 does not disclose the polyurethanes with anionic and terminal non-ionic hydrophilic groups of the present invention.

EP 4 127 081 relates to digitally printed laminates prepared from an aqueous primer coating composition and an aqueous pigmented inkjet printing ink wherein the primer coating composition comprises a water-dispersible polymer and a multivalent metal salt. Preferred water-dispersible polymers include non-ionic and cationic polyurethane dispersions, non-ionic, amphoteric and cationic acrylic homo- and copolymer dispersions and non-ionic vinyl acetate-containing polymer dispersions. EP 2 285 917 discloses an ink set for ink jet printing, comprising: an ink jettable ink comprising an aqueous colorant and an inkjettable fixer ink comprising: a multivalent metal salt and a salt stable, water soluble, predominantly non-ionic, polyurethane comprising ethylene oxide units. The polyurethane of EP 2 285 917 can also contain anionic groups, such as carboxylate groups, sulfonate groups, phosphate and phosphonate groups.

None of the cited documents discloses or suggests the use, as primers for inkjet printed laminates, of compositions comprising the specific polyurethane with anionic and terminal non-ionic hydrophilic groups of the present disclosure and the remarkable performances thereof.

### SUMMARY OF THE INVENTION

It is therefore a fundamental object of the present invention an aqueous polymeric composition useful as primer for the preparation of inkjet printed laminate, said aqueous polymeric composition comprising, based on the total weight of the composition:
a) from 15 to 55 % by weight of an anionic polyurethane prepared by chain extending in water a prepolymer obtained by reacting:
   I) hydrogenated diphenylmethane-4,4'-diisocyanate (H₁₂MDI);
   II) a non-ionic polyester diol having a molecular weight comprised between 500 and 3,500 g/mol;
   III) a C₁-C₄ monoalkyl ether of a polyoxyalkylene glycol and/or of a polyoxyalkylene monoamine having a molecular weight comprised between 400 and 2,500 g/mol and an oxyethylene content of more than 60 % by weight, calculated on the weight of the monoalkyl ether;
   IV) a diol having at least one carboxylic or carboxylate group;
   V) optionally, a non-ionic diol different from the diols II and IV and/or a non-ionic polyol having more than two reactive groups towards the isocyanate groups (NCO);
   VI) optionally, a diisocyanate different from the diisocyanate I and/or a polyisocyanate;
   in such proportions that: A) the molar ratio between the NCO groups of I and VI and the sum of the NCO reactive groups of II, III, IV and V is between 1.3 and 2.0; B) the molar ratio between the excess NCO groups and the C₁-C₄ monoalkyl ether is between 3.0 and 5.2; C) the amount of the diol IV is such that the prepolymer contains from 30 to 50 meq/100 g of prepolymer, as dry matter, of carboxylic or carboxylate groups; D) the amounts of the diol or polyol V, if present, do not exceed 15 % by weight of the sum of the compounds II and V; E) the amount of the diisocyanate and/or polyisocyanate VI, if present, do not exceed 15 % by weight of the sum I and VI;
b) from 0.2 to 10.0% by weight of a coagulating agent selected in the group consisting of water-soluble multivalent metal salts, water-soluble organic acids and mixtures thereof;
c) up to 30 % by weight, preferably between 3.0 and 20 % by weight, as active matter, of an acrylic binder;
d) at least 35 % by weight, preferably at least 45 % by weight, of water.

According to another aspect, the invention relates to a method of preparing an inkjet printed laminate comprising the following steps:
i) preparing the above described aqueous polymeric composition;
ii) applying said aqueous polymeric composition onto the surface of a plastic substrate to obtain a primed plastic substrate;
iii) inkjet printing an ink onto the primed plastic substrate;
iv) applying an adhesive for lamination onto the surface of the printed layer;
v) laminating the adhesive layer with a second substrate.

It is a further object of the invention the inkjet printed laminate obtained following the above described method.

### DETAILED DESCRIPTION OFTHE INVENTION

"Non-ionic diols" indicate diols having no anionic or cationic or potentially anionic or cationic functionality.

The molecular weight (MW) used in this text, when referred to polymeric diols or polyols, is calculated from their hydroxyl number (N_{OH}) in g/mol, determined according to standard test method ASTM D4274-11 (i.e. MW=56,100_{*}F_{OH}/N_{OH}, where F_{OH} is the nominal hydroxyl functionality per polymeric chain).

In the present invention, with the definition "excess NCO groups", we mean the molar difference between the NCO groups of I and VI and the sum of the NCO reactive groups of II, IV and V.

Preferably, the aqueous polymeric composition of the invention comprises from 20 to 45 % by weight of anionic polyurethane based on the weight of the aqueous polymeric composition. Preferably, the aqueous polymeric composition contains from 45 to 80 % by weight of water.

The non-ionic polyester diols that can be used as diols II in the preparation of the prepolymer are those commonly used in the field and known to the experts in the art and have molecular weight between 500 and 3,500 g/mol, preferably between 1,000 and 3,000 g/mol, more preferably between 1500 and 2,500 g/mol, most preferably about 2,000 g/mol.

Examples of suitable non-ionic polyester diols II include those obtained, for example, by reacting aliphatic, aromatic or cycloaliphatic dicarboxylic acids, or possibly the corresponding anhydrides, with diols, optionally in the presence of known esterification catalysts.

Examples of suitable dicarboxylic acids include adipic, glutaric, pimelic, suberic, nonane dicarboxylic, decane dicarboxylic, succinic, maleic, itaconic acid, sebacic, azelaic, terephthalic, isophthalic, o-phthalic, tetrahydrophthalic, hexahydrophthalic, 1,4-cyclohexane dicarboxylic acid; examples of suitable anhydride include succinic and o-phthalic anhydride ; various commercially available dimeric fatty acids in saturated (hydrogenated) or unsaturated form may also be used as the dicarboxylic acid.

Bio-based dicarboxylic acids, such as bio-based malonic, succinic, glutaric, adipic, itaconic, pimelic, suberic, azelaic, sebacic, undecanedioic, furan-2,5-dicarboxylic acid, dimer acids and diacids obtained from methatesis process of unsaturated fatty acids, and the like, are other examples of suitable dicarboxylic acids and are preferred. Bio-based adipic, sebacic, azelaic and itaconic acids are among the most preferred dicarboxylic acids, o-phthalic acid is another of the most preferred dicarboxylic acid. Examples of suitable diols for the preparation of the polyester diols are ethane diol, di-, tri- tetraethylene glycol, 1,2 propane diol, di-, tri-, tetra-propylene glycol, 1,3-propanediol, 1,4-butane diol, 1,3-butane diol, 2,3-butane diol, 1,6-hexane diol, 1,5-pentane diol, 2,2-dimethyl-1,3-propane diol (neopentylglycol), 1,4-dihydroxy cyclohexane, 1,8-octane diol, 1,10-decane diol, 1,12-dodecane diol, 2,2,4- and/or 2,4,4-trimethyl-1,3-pentane diol and mixtures thereof.

Bio-based diols, such as bio based 1,3-propane diol, 1,4 butane diol, 1,5-pentane diol, and 1,6-hexane diol are other examples of suitable diols.

Polyester diols obtained from adipic, sebacic, itaconic, azelaic acid and 1,6-hexane diol, 2,2-dimethyl propane-1,3-diol and 1,4-butane diol are particularly preferred.

The component III of the prepolymer of the invention is a C₁-C₄, preferably a C₁-C₂, monoalkyl ether of a polyoxyalkylene glycol and/or of a polyoxyalkylene monoamine having an average molecular weight comprised between 400 and 2,500 g/mol and an oxyethylene content of more than 60 % by weight, calculated on the weight of the monoalkyl ether. Preferably average molecular weight of the monoalkyl ether is between 500 and 2,000 g/mol, more preferably between 600 and 1,500 g/mol. Preferably, the oxyethylene content is more than 80 % by weight, calculated on the weight of the monoalkyl ether.

In a preferred embodiment, the component III is a C₁-C₄, preferably a C₁-C₂, monoalkyl ether of a polyoxyethylene glycol and/or a polyoxyethylene monoamine, more preferably it is a methyl ether of a polyoxyethylene glycol. In the most preferred embodiment, the component III is a methyl ether of a polyoxyethylene glycol having a molecular weight comprised between 600 and 1,500 g/mol.

Suitable C1-C4 monoalkyl ethers of a polyoxyalkylene monoamine have two NCO reactive hydrogens on the amino group. Huntsman's JEFFAMINE^{®} M series compounds, such as JEFFAMINE M-1000, JEFFAMINE M-2070, and JEFFAMINE M-2095, are examples of commercial products of these ethers.

The diol IV of the prepolymer is an anionic or potentially anionic diol having at least one carboxylic or carboxylate group, which is substituted in the position 2 by two hydroxymethyl groups. Preferably, the diol IV is dimethylol propionic acid (DMPA), dimethylol butanoic acid (DMBA), a salt thereof or mixture thereof; most preferably the diol IV is dimethylol propionic acid or a salt thereof.

The components V are non-ionic and can be selected from diols different from diols II, such as polyether or polycarbonate diols having a molecular weight between 300 and 2,500 g/mol, diols having a molecular weight below 300 g/mol, and polyols having more than two reactive groups towards the isocyanate groups.

Examples of suitable diols having a molecular weight below 300 g/mol are ethylene glycol, di-, tri-, tetra-ethylene glycol, 1,2 propane diol, di-, tri-, tetra-propylene glycol, 1,3-propane diol, 1,4-butane diol, 1,3-butanediol, 2,3-butane diol, 1,6-hexane diol, 1,5-pentane diol, 2,2-dimethyl-1,3-propane diol (neopentyl glycol), 1,4-dihydroxy cyclohexane, 1,4-dimethylol cyclohexane, 1,8-octane diol, 1,10-decane diol, 1,12-dodecane diol, 2,2,4- and/or 2,4,4-trimethyl-1,3-pentane diol and mixtures thereof.

Preferred diols with having molecular weight below 300 g/mol are ethylene glycol, 1,4-butane diol, 1,4-dimethylol cyclohexane and 1,6- hexane diol; 1,4-butane diol and 1,4-dimethylol cyclohexane are more preferred. Bio-based diols, such as bio-base 1,4-butane diol, are the most preferred.

Examples of polyether diols suitable as component V include products obtained by the polymerisation of cyclic oxides, for example ethylene oxide, propylene oxide, butylene oxide, tetrahydrofuran, and mixture thereof. Especially useful polyether diols include polypropylene glycol, poly(ethylene-propylene) glycol and polytetramethylene glycol (also called polytetrahydrofuran). The preferred polyether diol is polytetramethylene glycol.

Examples of suitable polyols V are glycerin, pentaerythritol, trimethylol propane and its derivatives, such as trifunctional polyethylene glycol started on trimethylol propane. Preferably, the polyols having more than two reactive groups towards NCO groups represent at most 3 % by weight of the sum of the components II, III and V. More preferably, polyols are not present in the prepolymer of the invention.

Examples of aliphatic and cycloaliphatic diisocyanates useful as component VI of the polyurethane of the present invention are 3-isocyanatomethyl-3,5,5-trimethyl cyclohexyl isocyanate (or isophorone diisocyanate), 1,6-hexamethylene diisocyanate (HDI), 2,4,4-trimethyl-1,6-hexamethylene diisocyanate (TMDI), 1,5-pentane diisocyanate (PDI), and mixtures thereof. Isophorone diisocyanate is the preferred aliphatic and cycloaliphatic diisocyanate.

The polyisocyanates suitable as component VI have average functionality above 2, preferably from 2.3 and 4.

Examples of suitable polyisocyanate VI are hexamethylene diisocyanate isocyanurate, hexamethylene diisocyanate biuret, isophoronediisocyanate isocyanurate and isophoronediisocyanate biuret.

In the prepolymer, the molar ratio between the sum of the NCO groups of I and VI and the sum of the isocyanate reactive groups of the compounds II, III, IV and V is between 1.3 and 2.0, preferably between 1.4 and 1.8.

The molar ratio between the excess NCO groups and the poly(ethylene glycol) C₁-C₄ monoalkyl ether is between 3.0 and 5.2, preferably between 3.3 and 4.8.

The total amount of carboxylic and carboxylate groups in the polyurethane is measured in milliequivalents (meq) of groups -COOH and -COO⁻ for 100 g of prepolymer, as dry matter. In the anionic polyurethanes of the present invention, this value is in the range from 30 to 50 meq/100 g, preferably in the range from 32 to 45 meq/100 g.

The amounts of the diol and/or polyol V if present, do not exceed 15 % by weight, preferably 10 % by weight, more preferably 5.0 % by weight, of the sum of the compounds II and V.

The amount of the disocyanate and/or polyisocyanate VI, if present, do not exceed 15 % by weight, preferably 10 % by weight, more preferably 5.0 % by weight, of the sum of the compounds I and VI.

Most preferably, components V and VI are not used in the preparation of the prepolymer.

The anionic polyurethane of the invention can be prepared according to a process comprising the following steps:
i. preparing a prepolymer by reacting the ingredients I-VI in the proportions described above;
ii. chain extending the prepolymer in water.

In the process, step i is preferably performed at temperature between 40 and 110 °C. A catalyst may be used to accelerate the reaction.

When the diol IV is used in acid form, the prepolymer obtained at the end of stage i is normally neutralized at a temperature below 100 °C, preferably with tertiary amines, like N-alkyl morpholines, trialkyl amines, alkylalkanol amines, trialkanol amines and mixtures thereof. Triethyl amine, dimethyl ethanolamine and N-ethyl morpholine are particularly suited for this scope.

Advantageously, the diol IV is neutralized before the reaction of step i. takes place. The neutralization can also be carried out during the dispersion in water of the prepolymer (step ii).

Step ii is carried out in water (or in water and neutralizing agent) under mechanical stirring. In step ii, the chain extension is preferably carried out in water in the presence of diamines as chain extenders. Diamines that can be used as chain extender are diamines having at least 2 active hydrogens toward the NCO group, such as hydrazine, ethylenediamine, piperazine, 1,5-pentane diamine, 1,6-hexane diamine, isophorone diamine, diethylene triamine and mixtures thereof. Typically, in step ii, the equivalent amount of chain extender(s) is from 30 to 100%, preferably from 70 to 100%, of the free NCO groups contained in the prepolymer.

Step ii of the process of the invention is preferably carried out percolating the prepolymer in water. After dispersion of the prepolymer, the chain extender may be added to provide the anionic polyurethane of the invention. The temperature of this step is preferably maintained below 40 °C.

In one embodiment, the process is carried out in the presence of a solvent which can be distilled off at the end of the preparation. Example of suitable solvent are methyl ethyl ketone (MEK), methyl isobutyl ketone, acetone and ethyl acetate.

The aqueous polymer composition of the invention can comprise from 0.2 to 10.0% by weight, preferably from 0.5 to 4.0 % by weight, based on the total weight of the composition of a a coagulating agent selected in the group consisting of water-soluble multivalent metal salts, water-soluble organic acids and mixtures thereof. According to the present invention, water-soluble means that at least 0.5 g of the multivalent metal salt or the organic acid can be dissolved in 100 ml water at 20 °C. Examples of suitable water-soluble polyvalent metal salts include salts of metals such as Ca, Mg, Ba, Zn, and Al salts, preferably Ca and Mg salts. Specific examples thereof include: calcium salts such as calcium nitrate, calcium chloride, calcium hydroxide, calcium acetate, and calcium formate; magnesium salts such as magnesium chloride, magnesium hydroxide, magnesium acetate, and magnesium sulfate. Two or more water-soluble polyvalent metal salts may be used in combination.

Calcium salts are preferred. Calcium nitrate, calcium chloride, calcium hydroxide, calcium acetate, and calcium formate are the preferred calcium salts.

Examples of suitable water-soluble organic acid include oxalic acid, succinic acid, maleic acid, butirric acid, citric acid, benzoic acid and mixtures thereof. Citric acid is preferred.

Water-soluble polyvalent metal salts are the preferred coagulating agents.

The aqueous polymeric composition of the invention can further comprise, as active matter, up to 30% by weight, preferably between 3.0 and 20 % by weight, more preferably between 3.0 and 15 % by weight of an aqueous emulsion of an acrylic binder commonly used in the field, which is compatible with the coagulating agents. The compatibility of the acrylic binder with the coagulating agents can be evaluated according to the following test: 80 g of acrylic binder are mixed with 22 g of a solution of calcium chloride at 10% by weight in water and stored for 48 hours at 50 °C. Only the acrylic binders that do not show an excessive increase of the viscosity upon storage are considered suitable for the preparation of the aqueous polymer compositions of the invention.

According to a preferred embodiment, the aqueous polymeric composition of the invention comprises based on the total weight of the composition:
a) from 15 to 55 % by weight of an anionic polyurethane prepared by chain extending in water a prepolymer obtained by reacting:
   I) hydrogenated diphenylmethane-4,4'-diisocyanate;
   II) a non-ionic polyester diol having a molecular weight comprised between 500 and 3,500 g/mol;
   III) a C₁-C₄ monoalkyl ether of a polyoxyalkylene glycol and/or of a polyoxyalkylene monoamine having an average molecular weight of comprised between 400 and 2,500 g/mol and an oxyethylene content of more than 60 % by weight, calculated on the weight of the monoalkyl ether;
   IV) a diol having at least one carboxylic or carboxylate group;
   in such proportions that: A) the molar ratio between the NCO groups of I and the sum of the NCO reactive groups of II, III and IV is between 1.3 and 2.0; B) the molar ratio between the excess NCO groups and the C₁-C₄ monoalkyl ether is between 3.0 and 5.2; C) the amount of the diol IV is such that the prepolymer contains from 30 to 50 meq/100 g of prepolymer, as dry matter, of carboxylic or carboxylate groups;
b) from 0.2 to 10.0% by weight of said coagulating agent;
c) up to 30 % by weight, preferably between 3.0 and 20 % by weight, of said acrylic binder;
d) at least 35 % by weight, preferably at least 45 % by weight, of water.

According to a more preferred embodiment, the aqueous polymeric composition of the invention comprises, based on the total weight of the composition:
a) from 15 to 55 % by weight of an anionic polyurethane prepared by chain extending in water a prepolymer obtained by reacting:
   I) hydrogenated diphenylmethane-4,4'-diisocyanate;
   II) a non-ionic polyester diol having a molecular weight comprised between 1000 and 3,500 g/mol;
   III) a C₁-C₂ monoalkyl ether of a polyoxyethylene glycol and/or of a polyoxyethylene monoamine having an average molecular weight comprised between 500 and 2,000 g/mol;
   IV) a diol having at least one carboxylic or carboxylate group selected in the group consisting of is dimethylol propionic acid, dimethylol butanoic acid, a salt therof, and mixtures thereof;
   in such proportions that: A) the molar ratio between the NCO groups of I and the sum of the NCO reactive groups of II, III and IV is between 1.3 and 2.0; B) the molar ratio between the excess NCO groups and the C₁-C₂ monoalkyl ether is between 3.3 and 4.8; C) the amount of the diol IV is such that the prepolymer contains from 30 to 50 meq/100 g of prepolymer, as dry matter, of carboxylic or carboxylate groups;
b) from 0.2 to 10.0% by weight of said coagulating agent;
c) up to 30 % by weight, preferably between 3.0 and 20 % by weight, of said acrylic binder;
d) at least 35 % by weight, preferably at least 45 % by weight, of water.

According to the most preferred embodiment, the aqueous polymeric composition of the invention comprises, based on the total weight of the composition:
a) from 15 to 55 % by weight of an anionic polyurethane prepared by chain extending in water a prepolymer obtained by reacting:
   I) hydrogenated diphenylmethane-4,4'-diisocyanate;
   II) a non-ionic polyester diol having a molecular weight comprised between 1000 and 3,000 g/mol;
   III) a methyl ether of a polyoxyethylene glycol having a molecular weight comprised between 500 and 2,000 g/mol, preferably between 600 and 1,500 g/mol;
   IV) a diol having at least one carboxylic or carboxylate group selected in the group consisting of is dimethylol propionic acid, dimethylol butanoic acid, a salt therof, and mixtures thereof;
   in such proportions that: A) the molar ratio between the NCO groups of I and the sum of the NCO reactive groups of II, III and IV is between 1.4 and 1.8; B) the molar ratio between the excess NCO groups and the methyl ether is between 3.3 and 4.8; C) the amount of the diol IV is such that the prepolymer contains from 35 to 45 meq/100 g of prepolymer, as dry matter, of carboxylic or carboxylate groups;
b) from 0.2 to 10.0% by weight of a coagulating agent selected in the group consisting of water-soluble multivalent metal salts and mixtures thereof;
c) up to 30 % by weight, preferably between 3.0 and 20 % by weight, as active matter, of an aqueous emulsion of an acrylic binder compatible with the coagulating agents;
d) at least 35 % by weight, preferably at least 45 % by weight, of water.

According to one embodiment of the invention, the aqueous polymer composition can be thickened by adding from 0.1 to 8.0 % by weight, preferably from 0.3 to 3.0 % by weight, of a thickener, preferably a polyurethane thickener.

The Brookfield viscosity at 25 °C of the aqueous polymeric composition of the present invention is generally from 10 to 1,000 mPa_{*}s, preferably from 10 to 500 mPa_{*}s, more preferably from 15 to 150 mPa_{*}s.

The aqueous polymer compositions of the present invention are stable, i.e. homogeneous or re-dispersible, and do not develop excessive viscosity upon storage, maintaining their pourability.

The aqueous polymer compositions are defined homogeneous when they remain visibly homogeneous when stored in a closed jar at 50 °C for at least 30 days.

The aqueous polymer compositions are defined re-dispersible when, stored in a closed jar at 50°C for at least 30 days they develop a sediment which is dispersible by the simple manual shaking of the jar.

The aqueous polymer compositions described above are film-forming and are advantageously utilizable as primer in the lamination of plastic substrates such as as polyolefins non-polar materials, for example polyethylene and polypropylene, polyesters, polyethylene terephthalate, polylactates, polyamides, for example nylon, polystyrene, polyvinyl chloride, ethylene-vinyl acetate and ethylene-vinyl alcohol copolymers. The substrate film is preferably approximately 1 to 500 µm thick.

The application of the aqueous compositions of the invention onto the plastic substrate is performed using the common coating applications methods, including but not limited to, spray coating, rod coating, blade coating, gravure coating (direct or reverse), flexographic coating, curtain coating and inkjet coating. Particularly preferred coating application methods are gravure coating, flexographic coating, and inkjet coating.

The primer layer obtained by applying and drying the aqueous polymer composition of the invention on the first substrate preferably has a dry thickness of approximately 0.2 to 15 µm, preferably 0.3 to 8.0 µm, more preferably approximately 0.4 to 3.0 µm.

Any inkjet ink and inkjet apparatus commonly used in the field can be utilized in step iii) of the method of the invention. The exact choice of inkjet ink will depend upon the specific application and performance requirements such as color reproduction and image stability.

Any adhesive commonly used in the field is suitable for the realization of the method of the invention. Among the adhesives, those based on aqueous acrylates, polyurethanes and combinations thereof are particularly advantageous. Specific examples of commercial products are the Robond^{®} L-Series acrylic adhesives L-90M, L-148, and L-330, optionally in combination with CR 9-101 crosslinker, from Dow. Other suitable examples are the Aqua-Lam^{®} 444A polyurethane water-based adhesive, in combination with CR7-103 crosslinker, also from Dow or the water based adhesive ESACOTE^{®} 5800, in combination with Crosslinker 08, Crosslinker 08 LM and Crosslinker 013 from Lamberti S.p.A. Other examples of suitable adhesives are Herberts HP 1020-F + Purbinder C1 from Bostik, Epotal CF 605X + Basonat LR 9056 from BASF and the like. The adhesive film has normally a dry thickness of approximately 1 to 15 µm, preferably approximately 2 to 5 µm.

Drying of the substrate after application of the coating layer(s) can occur at between 5 and 160 °C, preferably at between 40 and 120 °C. Drying at non-ambient temperature can be carried out in an oven; alternatively, drying can be supported by infrared and/or near infrared radiation or by forced air movement.

In phase v) of the process, the second substrate, the laminating one, is adhered onto the adhesive layer or vice versa. If necessary, pressure can be applied to achieve better adhesion between the adhesive layer and the second substrate surface.

In an embodiment of the invention, the adhesive can be applied on the second substrate and then the first and second coated substrates can be joined together to form the laminate.

The second substrate can be another plastic film, the same or different from the first substrate, but it can be also paper, woven or non-woven textile material and the like. Even objects may be laminated using the method of the present invention.

The method of the invention can be used in the preparation of inkjet printed laminates, in particular of laminates used in the manufacture of food, pharmaceutical, household, industrial packaging and personal care packaging. Preferably, in the preparation of food packaging.

In the examples that follow, the preparations and application of the aqueous polymer compositions according to the present invention and of comparative compositions are reported, together with the main characterization of the inkjet printed laminate obtained.

### EXAMPLES

### Characterization Methods

The residual content of isocyanate groups in the prepolymer was determined by reaction of the NCO groups of the prepolymer with an excess di-n-butylamine in ethyl acetate and by back-titration with HCl of the unreacted excess of di-n-butylamine in isopropanol. The result is calculated as % NCO groups by weight.

The % of dry matter was determined with an IR dryer, Mettler Toledo HB 43, set at a temperature of 160 °C. The stability of the aqueous polyurethane dispersions was determined by means of an aging test in oven for 30 days at 50°C.

### Raw Materials

The following raw materials were used in the Examples described afterwards:
IPDI = isophorone diisocyanate;
H12M DI = hydrogenated diphenylmethane 4,4'-diisocyanate;
PES-1 = poly(1,6-hexandiol-adipate/phthalate), MW = 2000 g/mol;
PES-2 = poly(1,6-hexandiol/neopentyl glycol adipate), MW= 2000 g/mol;
PC = polycarbonate diol from 1,6-hexanediol, MW 1000 g/mol;
BPA = bisphenol A bis(2-hydroxypropyl) ether;
MPEG = methoxy polyethylene glycol, MW = 750 g/mol;
D-3403= TEGOMER^{®} D-3403, from Evonik Operations Gmbh;
MPEG-A= IPDI-diethanol amine- MPEG adduct in DMM
DMPA = 2,2-dimethylol propionic acid;
EDA = ethylene diamine;
HYDR = hydrazine hydrate, 24 wt% water solution;
TEA = triethyl amine;
MEK = methyl ethyl ketone;
DMM = dipropylene glycol dimethyl ether;
BIND-1 = emulsion of an anionic waterborne acrylic polymer containing hydroxyl groups;
BIND-2 = soft self-crosslinking anionic acrylic polymer emulsion;
BIND-3 = rigid self-crosslinking anionic acrylic polymer emulsion;
ADH-1 = ESACOTE^{®} PU 5800 + 7 g/100 g of PU 5800 of Crosslinker C-08, both from Lamberti S.p.A.;
ADH-2 = ESACOTE^{®} PU 5800 + 7 g/100 g of PU 5800 of Crosslinker C-013, both from Lamberti S.p.A.;
ADH-3 = commercial solvent-based adhesive containing a polyurethanic polymer + (6 g of an isocyanate crosslinker + 84 g of ethyl acetate)/100 g of adhesive;
BOPP = 30 µm corona treated pristine BOPP A4 film (38 surface energy dyne/cm) from Jindal Films Europe;
BOPET = 12 µm corona treated BOPET A4 film (surface energy 48 dyne/cm) from Toray Films Europe

### PUD-1

190.96 g (0.096 mol) of PES-1, 52.21 g (0.067 mol) of MPEG and 18.33 g of DMPA (0.14 mol) and 120 g of MEK were charged in a reactor vessel equipped with thermometer, stirrer and condenser, under nitrogen atmosphere and heated at 40°C. 82.54 g of IPDI (0.371 mol) were added under stirring and the mixture was stirred for 10 minutes at 40 °C. The reaction mixture was then heated up and maintained at 80 °C until the residual content of NCO groups in the prepolymer was about 0.85 % by weight.

Once reached the required value of NCO groups the prepolymer solution was cooled down to 70 °C and 13.82 g of TEA were added under stirring.

An aliquot of 400 g of the prepolymer solution was then dispersed in 525 g of demineralized water under vigorous stirring and, subsequently, it was extended with 5.04 g (0.1 mol) of EDA.

At the end of the process, MEK was distilled off under reduce pressure.

The aqueous polyurethane dispersion so obtained had a dry matter content of 35 % by weight.

### PUD-2

152.4 g (0.152 mol) of PC, 17.12 g (0.014 mol) of D-3403 and 17.87 g of diethylamino propandiol (0.12 mol) were charged in a reactor vessel equipped with thermometer, stirrer and condenser, under nitrogen atmosphere and heated at 40°C.

112.91 g of H₁₂MDI (0.431 mol) were added under stirring and the mixture was stirred for 10 minutes at 40 °C. The reaction mixture was then heated up and maintained at 90 °C until the residual content of NCO groups in the prepolymer was about 2.31 % by weight.

Once reached the required value of NCO groups the prepolymer solution was cooled down to 80 °C and 61 g of M EK were added under stirring. Then 10.89 g (0.18 mol) of glacial acetic acid were added dropwise under stirring.

678 g of demineralized water were added under vigorous stirring and, subsequently, MEK was distilled off under reduce pressure.

The aqueous polyurethane dispersion so obtained had a dry matter content of 30 % by weight.

### PUD-3

183.24 g (0.09 mol) of PES-1, 50.10 g (0.067 mol) of M PEG and 17.59 g of DM PA (0.13 mol) and 120 g of MEK were charged in a reactor vessel equipped with thermometer, stirrer and condenser, under nitrogen atmosphere and heated at 40°C.

93.35 g of H₁₂MDI (0.356 mol) were added under stirring and the mixture was stirred for 10 minutes at 40 °C. The reaction mixture was then heated up and maintained at 80 °C until the residual content of NCO groups in the prepolymer was about 0.82 % by weight.

Once reached the required value of NCO groups the prepolymer solution was cooled down to 70 °C and 13.26 g of TEA were added under stirring.

An aliquot of 400 g of the prepolymer solution was then dispersed in 530 g of demineralized water under vigorous stirring and, subsequently, it was extended with 4.84 g (0.080 mol) of EDA.

At the end of the process, MEK was distilled off under reduce pressure.

The aqueous polyurethane dispersion so obtained had a dry matter content of 35 % by weight.

### PUD-4

181.74 g (0.091 mol) of PES-2, 63.88 g (0.049 mol) of MPEG-A and 4.08 g of DMPA (0.03 mol) and 30 g of DMM were charged in a reactor vessel equipped with thermometer, stirrer and condenser, under nitrogen atmosphere and heated at 40°C. Than 3.079 g of TEA were added dropwise and the mixture was stirred for20 minutes. 58.31 g of IPDI (0.262 mol) were added under stirring and the mixture was stirred for 10 minutes at 40 °C. The reaction mixture was then heated up and maintained at 75 °C until the residual content of NCO groups in the prepolymer was about 2.27 % by weight.

An aliquot of 400 g of the prepolymer solution was then dispersed in 750 g of demineralized water with under vigorous stirring and, subsequently, it was extended with 20.25 g (0.097 mol) of HYDR.

The aqueous polyurethane dispersion so obtained had a dry matter content of 30 % by weight.

### PUD 5

206.80 g (0.103 mol) of PES-1, 4.02 g (0.011 mol) of BPA and 19.73 g of DMPA (0.147 mol) and 120 g of MEK were charged in a reactor vessel equipped with thermometer, stirrer and condenser, under nitrogen atmosphere and heated at 40°C.

109.78 g of H₁₂MDI (0.419 mol) were added under stirring and the mixture was stirred for 10 minutes at 40 °C. The reaction mixture was then heated up and maintained at 80 °C until the residual content of NCO groups in the prepolymer was about 1.48% by weight.

Once reached the required value of NCO groups the prepolymer solution was cooled down to 70 °C and 14.87 g of TEA were added under stirring.

An aliquot of 400 g of the prepolymer solution was then dispersed in 584 g of demineralized water under vigorous stirring and, subsequently, it was extended with 7.63 g (0.127 mol) of EDA.

At the end of the process, MEK was distilled off under reduce pressure.

The aqueous polyurethane dispersion so obtained had a dry matter content of 35 % by weight.

Table 1 resumes the main ingredients, i.e. the diisocyanates (DIC), the polymeric diol (Diol), the alkyl ether of polyoxyethylene glycol (Ether) and the extender, used for the preparation of PUD1-5. Table 1 also reports the molar ratio between the NCO groups and the NCO reactive groups (Ratio NCO/OH), the molar ratio between the excess NCO and MPEG (Ratio NCO/MPEG), the content of DMPA in meq/100 g of prepolymer (as dry matter), the residual content of NCO groups (% NCO), as % by weight on the dry matter before the chain extension, and the final % dry matter content.

**Table 1**

| | PUD-1* | PUD-2* | PUD-3 | PUD-4* | PUD-5* |
|---|---|---|---|---|---|
| DIC | IPDI | H₁₂MDI | H₁₂MDI | IPDI | H₁₂MDI |
| Diol | PES-1 | PC | PES-1 | PES-2 | PES-1 |
| Ratio NCO/OH | 1.6 | 1.5 | 1.6 | 1.5 | 1.6 |
| Ether | MPEG | D3403 | MPEG | MPEG-A | - |
| Ratio NCO/MPEG | 4.0 | NA | 4.0 | NA | - |
| meq DMPA | 39.0 | NA | 37.5 | 10.1 | 42.0 |
| Extender | EDA | - | EDA | HYDR | EDA |
| % NCO | 0.85 | 2.31 | 0.82 | 2.27 | 1.48 |
| % Dry Matter | 35 | 30 | 35 | 30 | 35 |

| | | | | | |
|---|---|---|---|---|---|
| *comparative NA = Not Applicable | | | | | |

### Examples 1-9

The aqueous polyurethane dispersions described above were mixed under stirring at 300 rpm with different amounts CaCl₂, and, optionally, with binders 1-3. The aqueous polymer compositions so obtained were homogenized for 30 minutes and tested. Table 2 reports the amount, as % by weight of active matter, of the polyurethanes 1-5 (%/PUD) and acrylate binders 1-3 (%/Binder) and of CaCl₂ in the aqueous polymer compositions of Examples 1-9.

**Table 2**

| | Polyurethane | | Acrylate | | % CaCl2 |
|---|---|---|---|---|---|
| | % | PUD | % | Binder | |
| Example 1* | 30 | PUD-2 | - | | 1.0 |
| Example 2* | - | - | 6 | BIND-1 | 1.8 |
| | | | 23 | BIND-2 | |
| Example 3 | 28 | PUD-3 | - | | 1.0 |
| Example 4 | 27 | PUD-3 | 5 | BIND-1 | 2.6 |
| Example 5 | 27 | PUD-3 | 5 | BIND-2 | 1.0 |
| Example 6 | 27 | PUD-3 | 5 | BIND-3 | 1.0 |
| Example 7* | 24 | PUD-4 | - | | 0.2 |
| Example 8* | 28 | PUD-5 | - | | 0.2 |
| Example 9* | 28 | PUD-1 | - | | 1.0 |

| | | | | | |
|---|---|---|---|---|---|
| * Comparative | | | | | |

The comparative aqueous polymer dispersions of Examples 8 and 9 coagulated soon after the addition of the calcium chloride salt.

The aqueous polymer dispersions according to the invention described in Table 1 were stable, i.e. homogeneous or re-dispersible, for 30 days at 50 °C.

### DELAMINATION TESTS

The delamination force was determined on 15mm width laminate specimens with a Zwick/Roell dynamometer, Mod. zwickiLine Z0.5 TH equipped with 1 KN cell, set at a delamination speed of 30 mm/min. The higher the delamination force, the better the laminate.

### Delamination Tests on Unprinted Laminates

The aqueous polymer compositions according to the invention of Examples 3-6 and of the comparative composition of Example 7 were applied on BOPP at 0.8 grams (dry matter) per square meter with a K Hand Coater (RK Printcoat Instruments). The primer layers were subsequently dried in a ventilated oven at 70 °C for 1 min.

The laminates were completed applying with the K Hand Coater 3.5 grams of adhesive ADH-1 (dry matter) per square meter on another BOPP film and unrolling the primed substrate on the adhesive layer dried in ventilated oven at 70 °C for 2 min. After the unrolling, a pressure of 0.2 kg/cm² was applied on the laminates. Laminates 1-5 were stored at 15±3 °C for 7 days before delamination test maintaining the applied pressure of 0.2 kg/cm².

The laminates were tested before (DF-BP) and after pasteurization in water at 85 °C for 30 min (DF-AP). Table 3 show the delamination force in N/15 mm of the laminates 1-5.

**Table 3**

| | Primer | DF-BP | DF-AP |
|---|---|---|---|
| Lam 1 | Example 3 | 3.7 | 2.2 |
| Lam 2* | Example 7* | 1.5 | 0.6 |
| Lam 3 | Example 4 | 3.5 | 2.2 |
| Lam 4 | Example 5 | 3.5 | 2.5 |
| Lam 5 | Example 6 | 3.5 | 2.3 |

| | | | |
|---|---|---|---|
| * Comparative | | | |

The laminates obtained with polymer compositions according to the invention showed good delamination forces.

Remarkably lower force was required to delaminate the laminates obtained with the compositions of the comparative Examples both before and, in particular, after the pasteurization treatment.

### Delamination Tests on Printed Laminates

A primer layer was applied on BOPP films following the same procedure described for laminates 1-5. The primer layer was then printed with a RICOH Aficio SG 3110 DN inkjet printer using RICOH GC 41 non-resinated inks.

The laminates 6-10 were completed as described above and stored at 15±3 °C for 7 days before the delamination test maintaining an applied pressure of 0.2 kg/cm².

The delamination force determinations were performed before (DF-BP) and after pasteurization (DF-AP) both on printed area showing a high ink density, i.e. >60% of printed points (High Ink), and on printed area showing a low ink density, i.e. <60% of printed points (Low Ink). Table 3 show the results obtained for the laminates 6-10 in N/15 mm.

**Table 4**

| | Primer | DF-BP | | DF-AP | |
|---|---|---|---|---|---|
| | | High Ink | Low Ink | High Ink | Low Ink |
| Lam 6 | Example 3 | 1.5 | 2.5 | 1.3 | 1.9 |
| Lam 7* | Example 7* | 1.0 | 1.5 | 0.3 | 1.2 |
| Lam 8 | Example 4 | 1.8 | 3.4 | 0.8 | 1.5 |
| Lam 9 | Example 5 | 1.8 | 3.5 | 0.8 | 1.8 |
| Lam 10 | Example 6 | 1.5 | 3.0 | 0.8 | 2.0 |

| | | | | | |
|---|---|---|---|---|---|
| *Comparative | | | | | |

Even after printing, the laminates obtained with polymer compositions according to the invention showed good delamination forces.

Again, the laminates obtained with the compositions of the comparative Examples exhibited worse performances both before and, in particular, after pasteurization test.

### Delamination Test with Different Adhesives

The behavior of the aqueous polymer compositions of Examples 1 and 2, comparative, and Example 4, according to the invention, in combination different kinds of adhesives was further investigated.

The unprinted laminates 11 -13 were prepared using the same procedure reported above for laminates 1-5 using ADH-1 as adhesive.

The printed laminates 14-16 were prepared using the same procedure reported above for laminates 6-10 ADH-3 using as adhesive.

Laminates 11-16 were then stored at 20±3 °C for 21 days before the delamination test maintaining an applied pressure of 0.2 kg/cm².

The delamination force before (DL-BP) and after pasteurization (DL-AP) were determined. Table 5 reports the results obtained in N/15mm.

**Table 5**

| | Primer | Adhesive | DL-BP | | DL-AP | |
|---|---|---|---|---|---|---|
| | | | High Ink | Low Ink | High Ink | Low Ink |
| Lam 11* | Example 1 | ADH-1 | 2.20 | 2.50 | 1.5 | 2.0 |
| Lam 12* | Example 2 | ADH-1 | 2.5 | 3.0 | 2.0 | 3.0 |
| Lam 13 | Example 4 | ADH-1 | 3.1 | 4.4 | 4.0 | 6.0 |
| Lam 14* | Example 1 | ADH-3 | 0.6 | 0.9 | 0.3 | 0.4 |
| Lam 15* | Example 2 | ADH-3 | 1.2 | 1.6 | 0.2 | 0.2 |
| Lam 16 | Example 4 | ADH-3 | 1.3 | 2.3 | 0.7 | 1.8 |

| | | | | | | |
|---|---|---|---|---|---|---|
| *Comparative | | | | | | |

The aqueous polymer composition according to the invention showed better delamination performances than the comparative aqueous polymer compositions both with aqueous and solvent based adhesive.

### Delamination Tests with Different Crosslinkers

The behavior of the aqueous polymer composition of Example 4, according to the invention, with different kinds of adhesive crosslinkers was further investigated.

The unprinted laminates 17 and 18 were prepared using the same procedure reported above for laminates 1-5 using ADH-1 or ADH-2, respectively, as adhesive.

The printed Laminates 19 and 20 were prepared using the same procedure reported above for Laminate 6-10 using ADH-1 or ADH-2, respectively, as adhesive.

The laminates 17-20 were then stored for 7 days at an average temperature of 15±3 °C maintaining an applied pressure of 0.2 kg/cm².

The delamination force before (DL-BP) and after pasteurization (DL-AP) were determined. Table 6 reports the results obtained in N/15mm.

**Table 6**

| | Crosslinker | Printing | DL-BP | DL-AP |
|---|---|---|---|---|
| Lam 17 | C-08 | - | ND | 1.7 |
| Lam 18 | C-013 | - | 3.1 | 1.3 |
| Lam 19 | C-08 | (High Ink) | 1.7 | 1.3 |
| | | (Low Ink) | 2.4 | 1.9 |
| Lam 20 | C-013 | (High Ink) | 1.5 | 0.8 |
| | | (Low Ink) | 2.1 | 1.3 |

| | | | | |
|---|---|---|---|---|
| ND= not determinable because of material break before delamination | | | | |

### Delamination Tests with Different Substrates

Finally, the behavior of the aqueous polymer composition of Example 4 on different substrates and in the presence of different crosslinker kinds was investigated.

The printed laminates 21 and 22 were prepared using a BOPP film as first and second substrate, following the same procedure reported above for Laminate 6-10. ADH-2 and ADH-1, respectively, were used as adhesive.

The printed laminates 23 and 24 were prepared using a BOPET film as first substrate and a BOPP film as second substrate, following the same procedure reported above for Laminate 6-10. ADH-2 and ADH-1, respectively, were used as adhesive.

The laminates 21-24 were then stored for 7 days at an average temperature of 15±3 °C maintaining an applied pressure of 0.2 kg/cm².

Table 7 show the delamination force in N/15 mm before (DL-BP) and after (DL-AP) pasteurization for the Laminates 21-24.

**Table 7**

| | Substrate 1 | Adhesive | DL-BP | | DL-AP | |
|---|---|---|---|---|---|---|
| | | | High ink | Low ink | High ink | Low ink |
| Lam 21 | BOPP | ADH-2 | 1.2 | 2.5 | 0.8 | 1.8 |
| Lam 22 | BOPP | ADH-1 | 1.7 | 2.2 | 0.8 | 1.9 |
| Lam 23 | BOPET | ADH-2 | 0.8 | 2.3 | 1.3 | 2.7 |
| Lam 24 | BOPET | ADH-1 | 1.6 | 2.5 | 1.2 | 2.7 |

The aqueous polymer composition according to the invention showed remarkable delamination performances even on BOPET film (before and after pasteurization), despite its intrinsic polarity, hydrophilicity and low thickness.

## Claims

1. Aqueous polymer composition useful as primer for the preparation of inkjet printed laminate, said aqueous polymeric composition comprising, based on the total weight of the composition:
a) from 15 to 55% by weight of an anionic polyurethane prepared by chain extending in water a prepolymer obtained by reacting:
I) hydrogenated diphenylmethane-4,4'-diisocyanate;
II) a non-ionic polyester diol with molecular weight between 500 and 3,500 g/mol, obtained by reacting aliphatic, aromatic or cycloaliphatic dicarboxylic acids, or the corresponding anhydrides, with diols;
III) a C₁-C₄ monoalkyl ether of a polyoxyalkylene glycol and/or of a polyoxyalkylene monoamine having an average molecular weight of comprised between 400 and 2,500 g/mol and an oxyethylene content of more than 60 % by weight, calculated on the weight of the monoalkyl ether;
IV) a diol having at least one carboxylic or carboxylate group;
V) optionally, a non-ionic diol different from the diols II and IV or a non-ionic polyol having more than two reactive groups towards the isocyanate groups (NCO);
VI) optionally, an aliphatic and cycloaliphatic diisocyanate different from the diisocyanate I or an aliphatic and cycloaliphatic polyisocyanate;
in such proportions that: A) the molar ratio between the sum of the NCO groups of I and Vl and the sum of the groups reactive towards the NCO groups of the compounds II, III, IV and V is between 1.2 and 2.2; B) the molar ratio between the excess NCO groups and the C₁-C₄ monoalkyl ether is between 3.0 and 5.2;; C) the amount of the diol IV is such that the prepolymer contains from 30 to 50 meq/100 g of prepolymer, as dry matter, of carboxylic or carboxylate groups; D) the amounts of the diol or polyol V, if present, do not exceed 15 % by weight of the sum of the compounds II and V; E) the amount of the diisocyanate and/or polyisocyanate VI, if present, do not exceed 15 % by weight of the sum I and VI;
b) from 0.2 to 10.0% by weight of a coagulating agent selected in the group consisting of water-soluble multivalent metal salts, water-soluble organic acids and mixtures thereof;
c) up to 30 % by weight, as active matter, of an acrylic binder;
d) at least 35 % by weight of water.

2. The aqueous polymer composition of claim 1, wherein the molar ratio between the excess NCO groups and the C₁-C₄ monoalkyl ether is between 3.3 and 4.8.

3. The aqueous polymer composition of claims 1 and 2, wherein the molar ratio between the sum of the isocyanate groups (NCO) of I and VI and the sum of the groups reactive towards the NCO groups of II, III, IV-and V is between 1.5 and 2.0.

4. The aqueous polymer composition of claim 1-3, wherein said C₁-C₄ monoalkyl ether III) has a molecular weight comprised between 500 and 1,500 g/mol.

5. The aqueous polymer composition of claim 1-3, wherein said C₁-C₄ monoalkyl ether III) has an oxyethylene content of 100 % by weight, calculated on the weight of the monoalkyl ether.

6. The aqueous polymer composition of claim 1, wherein the diol IV is dimethylol propionic acid, dimethylol butanoic acid, a salt therof, or a mixture thereof.

7. The aqueous polymer composition of claim 1, comprising, based on the total weight of the composition:
a) from 15 to 55% by weight of said anionic polyurethane;
b) from 0.2 to 10.0% by weight of said coagulating agent;
c) between 3.0 and 20 % by weight, as active matter, of said acrylic binder;
d) at least 35 % by weight of water.

8. The aqueous polymer composition of claim 1, wherein the coagulating agent is a water-soluble multivalent metal salt and it is chosen among salts of Ca, Mg, Ba, Zn, Al and mixtures thereof.

9. The aqueous polymer composition of claim 1, comprising, based on the total weight of the composition:
a) from 15 to 55 % by weight of an anionic polyurethane prepared by chain extending in water a prepolymer obtained by reacting:
I) hydrogenated diphenylmethane-4,4'-diisocyanate;
II) a non-ionic polyester diol having a molecular weight comprised between 500 and 3,500 g/mol, obtained by reacting aliphatic, aromatic or cycloaliphatic dicarboxylic acids, or the corresponding anhydrides, with diols;
III) a C₁-C₄ monoalkyl ether of a polyoxyalkylene glycol and/or of a polyoxyalkylene monoamine having an average molecular weight of comprised between 400 and 2,500 g/mol and an oxyethylene content of more than 60 % by weight, calculated on the weight of the monoalkyl ether;
IV) a diol having at least one carboxylic or carboxylate group;
in such proportions that: A) the molar ratio between the NCO groups of I and the sum of the NCO reactive groups of II, III and IV is between 1.3 and 2.0; B) the molar ratio between the excess NCO groups and the C₁-C₄ monoalkyl ether is between 3.0 and 5.2; C) the amount of the diol IV is such that the prepolymer contains from 30 to 50 meq/100 g of prepolymer, as dry matter, of carboxylic or carboxylate groups;
b) from 0.2 to 10.0% by weight of said coagulating agent;
c) up to 30 % by weight, as active matter, of said acrylic binder.

10. Method of preparing an inkjet printed laminate comprising the following steps:
i) preparing an aqueous polymeric composition according to any of claims 1-9:
ii) applying said aqueous polymeric composition onto the surface of a plastic substrate to obtain a primed substrate;
iii) printing an inkjet ink onto the primed substrate;
iv) applying an adhesive for lamination onto the surface of the printed layer;
v) laminating the adhesive layer with a second substrate.
